# EUROPÄISCHE PATENTSCHRIFT

(11) **EP 1 123 554 B1**
(45) Veröffentlichungstag und Bekanntmachung des Hinweises auf die Patenterteilung: **17.04.2002**
(21) Anmeldenummer: 99957904.8
(22) Anmeldetag: 12.10.1999
(51) Int. Cl.: H01H 33/662

(54) **ISOLIERTRÄGER FÜR VAKUUMSCHÜTZE**
INSULATING CARRIERS FOR VACUUM CIRCUIT BREAKERS
SUPPORTS ISOLANTS POUR DISJONCTEURS A VIDE

(30) Priorität: 23.10.1998 DE 19850207
(43) Veröffentlichungstag der Anmeldung: 16.08.2001
(73) Patentinhaber: SIEMENS AKTIENGESELLSCHAFT, 80333 München (DE)
(72) Erfinder: STELZER, Andreas, D-10115 Berlin (DE); SCHÖNTAG, Hartmut, D-16540 Hohen Neuendorf (DE); ZEUKE, Reinhard, D-14050 Berlin (DE)
(86) Internationale Anmeldenummer: DE9903307
(87) Internationale Veröffentlichungsnummer: WO0025335

(56) Entgegenhaltungen:
- WO-A1-96/18225
- US-A- 4 449 021
- US-A- 5 767 451

## Beschreibung

Die Erfindung betrifft Isolierträger für Vakuumschalter mit Antriebseinrichtungen zum Einbau in Schaltanlagen, insbesondere in Mittelspannungs-Schaltanlagen, wobei die Isolierträger jeweils aus einem flachbettartigen Kunststoffprofil bebildet sind, deren einer Endbereich mit einem ersten Befestigungsschenkel mit längsmittensymmetrisch angeordneten Schraubenlagern zur lösbaren Verbindung mit den Vakuumschaltern und deren zweiter Endbereich mit einem zweiten Befestigungsschenkel mit ebenfalls längsmittensymmetrisch angeordneten Schraubenlagern zur lösbaren Verbindung mit den Schaltanlagen ausgestattet sind.

Derartige definierte Isolierträger für Vakuumschalter sind durch DE-U 94 09 006 bekannt.
Die Vakuumschalter sind hier durch Vakuumschaltröhren realisiert, die - jeweils von zwei Isolierträgern umschlossen - in gasgefüllte Behälter von Schaltanlagen eingebaut werden. Jede Vakuumschaltröhre weist praktisch ein aus zwei Isolierträgern gebildetes eigenes Isoliergehäuse auf. Die Steuerung der Vakuumschaltröhren zum Schalten der Phasen erfolgt durch die gemeinsame Antriebseinrichtung.

Vakuumschütze, bei denen die Schalthäufigkeit bei allerdings geringere Schaltspannungsbelastung gegenüber den Vakuumschaltröhren ein Vielfaches beträgt, sind dagegen bekannter Maßen blockweise in einem gemeinsamen Isoliergehäuse untergebracht. Auch hier werden bei mehrphasigen Schaltanlagen mehrere Vakuumschütze gleichzeitig von der gemeinsamen Antriebseinrichtung gesteuert.

Die der Erfindung zugrunde liegende Aufgabe besteht darin, ein Befestigungskonzept für Vakuumschütze zu definieren, mit dem die Artenvielfalt der Befestigungselemente gegenüber den bisher üblichen Standard erheblich reduziert ist, ohne die in dieser Technik üblichen hohen Sicherheitsanforderungen einzuschränken.
Erfindungsgemäß wird dies durch die Merkmale
1.1 die Isolierträger sind durch Polschalen zur Aufnahme von Vakuumschützen realisiert,
1.2 die Polschalen weisen jeweils ein nach Innen gewölbtes Umschließungsprofil auf,
1.3 die Polschalen sind zur lösbaren Verbindung mit den Vakuumschützen jeweils mit spiegelbildlich zueinander angeordneten Vakuumschütz-Befestigungsstegen ausgestattet,
1.4 die Polschalen sind zur lösbaren Verbindung mit den Schaltanlagen jeweils mit einem Polschalen-Befestigungssteg ausgestattet,
1.5 die Polschalen weisen Innen eine an die Spannungsverhältnisse der Vakuumschütze angepaßte Anzahl vom umlaufenden Querrippen auf, die zu den Längsachsen der Polschalen annähernd rechtwinklig verlaufen,
erreicht.

Der Erfindung liegt also die Erkenntnis zugrunde, die Vorteile eines einheitlichen Isoliergehäuses mit großer Stabilität für Vakuumschütze und die größere Flexibilität beim Einbau von Vakuumröhren unterschiedlicher Bauarten mit separat zugeordneten Isoliergehäusen miteinander vereinen. Durch das nach Innen gewölbte Umschließungsprofil mit seinen an die jeweiligen Spannungsverhältnisse angepaßte Anzahl von umlaufenden Querrippen sind die Isoliergehäuse auch für die Vakuumschütze mit ausreichender Formstabilität versehen. Diese Formstabilität wird in besonderer Weise noch zusätzlich durch die spiegelbildlich zueinander angeordneten Vakuumschütz-Befestigungsstege und dem Vakuumschütz-Befestigungssteg verstärkt.

Gemäß einer vorteilhaften Ausgestaltung der Erfindung sind die Merkmale
2.1 die Polschalen sind jeweils im Bereich der Krafteinwirkung der Antriebseinrichtung mit einem Führungsteg versehen,
2.2 die nach Innen weisenden freien Enden des Führungssteges weisen jeweils eine Führungsausnehmung auf,
vorgesehen.
Mit dem Führungssteg sind durch geeignete Zentrier- und Führungsmittel die beweglichen Teile der Vakuumschütze vor einwirkenden Querkräften wirksam geschützt und somit die Anzahl der Schaltunterbrechungen erhöht, so daß damit die Lebensdauer der Vakuumschütze erheblich verlängert ist.

Eine weitere Ausgestaltung der Erfindung sieht das Merkmal
3.1 das nach Innen gewölbtes Umschließungsprofil der Polschalen ist derart bemessen, daß der Einbau von Vakuumschützen mit unterschiedlichem Umfang und Abstand derselben zueinander in den Schaltanlagen mit Polschalen der gleichen Bauart erfolgt,
vor.
Mit derartig konzipierten Polschalen lassen sich ohne konstruktive Veränderungen derselben Vakuumschütze unterschiedlicher Bauart in den Schaltanlagen einbauen.

Die Erfindung wird durch ein in drei Figuren dargestelltes Ausführungsbeispiel näher erläutert, wobei die
- Figur 1: die Vorderansicht auf den Innenbereich der Polschale darstellt und die
- Figuren 2 und 3: die Draufsicht und die Seitenansicht der Polschale zeigen.

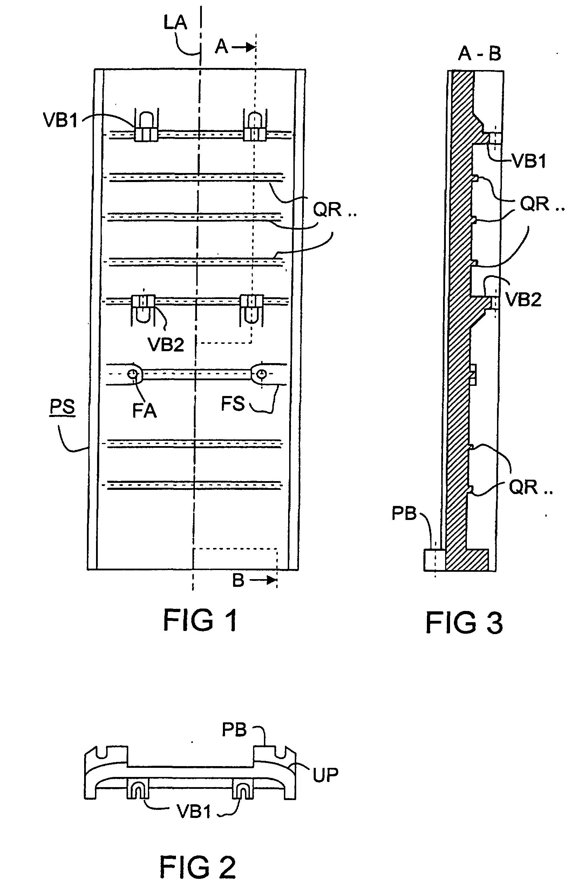

Die Figur 1 stellt die Polschale PS mit der Längsachse LA dar. Im sichtbaren Innenbereich der Polschale PS sind der oberer und der untere Vakuumschütz-Befestigungssteg VB1 und VB2 erkennbar, die zueinander spiegelbildlich angeordnet sind. Zwischen den Vakuumschütz-Befestigungsstegen VB1 und VB2 sind die nicht dargestellten Vakuumschutze durch ebenfalls nicht dargestellte Befestungsmittel anzuordnen. Unter dem unteren Vakuumschütz-Befestigungssteg VB2 ist außerdem der durchgehende Führungssteg FS vorhanden, der an den nach Innen weisenden freien Enden mit jeweils einer Führungsausnehmung FA versehen ist. Mit dem Eingriff entsprechender Zentrier- und Führungsmittel in die Führungausnehmungen FA des Führungsstegs FS lassen sich die beim Schalten der Vakuumschütze auftretenden Querkräfte auf die beweglichen Teile weitestgehend verhindern, so daß mit einer höhere Anzahl von Schaltunterbrechungen die Lebensdauer der Vakuumschütze verlängert ist.

Aus der Figur 2, die die Draufsicht auf die Polschale PS (Fig. 1) zeigt, ist besonders das nach Innen gewölbte Umschließungsprofil UP ersichtlich. Darüber hinaus ist der Polschalen-Befestigungssteg PB mit einer nicht dargestellten Schraubbefestigung erkennbar.

Die Figur 3 zeigt die Polschale PS (Fig. 1) im Profilschnitt entlang der Schnittlinie A-B (Fig. 1).
Aus dieser Darstellung sind die durch die Vakuumschütz-Befestigungsstege VB1 und VB2 und die dazu parallel angeordneten Querrippen QR... bedingten Profilversteifungen besonders deutlich zu erkennen.
Durch die nach oben und nach unten hin verstärkten Vakuumschütz-Befestigungsstege VB1 und VB2 sind die Vakuumschütze zwischen den Polschalen PS (Fig. 1) sicher zu befestigen.

## Patentansprüche

1. Isolierträger für Vakuumschalter mit Antriebseinrichtungen zum Einbau in Schaltanlagen, insbesondere in Mittelspannungs-Schaltanlagen, wobei die Isolierträger jeweils aus einem flachbettartigen Kunststoffprofil gebildet sind, deren einer Endbereich mit einem ersten Befestigungsschenkel mit längsmittensymmetrisch angeordneten Schraubenlagern zur lösbaren Verbindung mit den Vakuumschaltern und deren zweiter Endbereich mit einem zweiten Befestigungsschenkel mit ebenfalls längsmittensymmetrisch angeordneten Schraubenlagern zur lösbaren Verbindung mit den Schaltanlagen ausgestattet sind,
**gekennzeichnet durch** die Merkmale
1.1 die Isolierträger sind **durch** Polschalen (PS) zur Aufnahme von Vakuumschützen realisiert,
1.2 die Polschalen (PS) weisen jeweils ein nach Innen gewölbtes Umschließungsprofil (UP) auf,
1.3 die Polschalen (PS) sind zur lösbaren Verbindung mit den Vakuumschützen jeweils mit spiegelbildlich zueinander angeordneten Vakuumschütz-Befestigungsstegen (VB1,VB2) ausgestattet,
1.4 die Polschalen (PS) sind zur lösbaren Verbindung mit den Schaltanlagen jeweils mit einem Polschalen-Befestigungssteg (PB) ausgestattet,
1.5 die Polschalen (PS) weisen Innen eine an die Spannungsverhältnisse der Vakuumschütze angepaßte Anzahl vom umlaufenden Querrippen (QR...) auf, die zu den Längsachsen (LA) der Polschalen (PS) annähernd rechtwinklig verlaufen.

2. Isolierträger nach Patentanspruch 1,
**gekennzeichnet durch** die Merkmale
2.1 die Polschalen (PS) sind jeweils im Bereich der Krafteinwirkung der Antriebseinrichtung mit einem Führungsteg (FS) versehen,
2.2 die nach Innen weisenden freien Enden des Führungssteges (FS) weisen jeweils eine Führungsausnehmung (FA) auf.

3. Isolierträger nach Patentanspruch 1 und den Patentansprüchen 1 und 2,
**gekennzeichnet durch** das Merkmal
3.1 das nach Innen gewölbtes Umschließungsprofil (UP) der Polschalen (PS) ist derart bemessen, daß der Einbau von Vakuumschützen mit unterschiedlichem Umfang und Abstand derselben zueinander in den Schaltanlagen mit Polschalen (PS) der gleichen Bauart erfolgt.

## Claims

1. Insulating bases for vacuum switches having drive devices for installation in switchgear assemblies, in particular in medium-voltage switchgear assemblies, with the insulating bases each being formed from a plastic profile which is like a flat bed, one of whose end regions is -equipped with a first attachment limb with screw mountings, arranged symmetrically with respect to the longitudinal centre, for detachable connection to the vacuum switches, and whose second end region is equipped with a second attachment limb having screw mountings, likewise arranged symmetrically with respect to the longitudinal centre, for detachable connection to the switchgear assemblies,
**characterized by** the following features:
1.1 the insulating bases are in the form of pole shells (PS) for accommodation of vacuum contactors,
1.2 the pole shells (PS) each have an enclosure profile (UP) curved inwards,
1.3 for detachable connection to the vacuum contactors, the pole shells (PS) are each equipped with vacuum contactor attachment webs (VB1, VB2) which are arranged as mirror images of one another,
1.4 for detachable connection to the switchgear assemblies, the pole shells (PS) are each equipped with a pole shell attachment web (PB),
1.5 on the inside, the pole shells (PS) have a number of circumferential transverse ribs (QR...) which run approximately at right angles to the longitudinal axes (LA) of the pole shells (PS), and the number of which is matched to the voltage conditions in the vacuum contactors.

2. Insulating bases according to Claim 1,
**characterized by** the following features:
2.1 the pole shells (PS) are each provided with a guide web (FS) in the region in which the force of the drive device acts,
2.2 the free ends of the guide web (FS), which point inwards, each have a guide recess (FA).

3. Insulating bases according to Patent Claim 1 and Patent Claims 1 and 2,
**characterized by** the following feature:
3.1 the enclosure profile (UP), which is curved inwards, of the pole shells (PS) is dimensioned in such a manner that vacuum contactors with a different circumference and a different distance between them are installed in the switchgear assemblies using pole shells (PS) of an identical type.

## Revendications

1. Supports isolants pour appareil de coupure sous vide, ayant des dispositifs de transmission destinés à être montés dans des installations de distribution, notamment dans des installations de distribution en moyenne tension, les supports isolants étant constitués respectivement d'un profilé en matière plastique du type à base plate dont les unes des parties d'extrémité est munie d'une première branche de fixation ayant des paliers à vis disposés à symétrie longitudinale et destinés à une liaison amovible avec les appareils de coupure sous vide et dont des deuxièmes parties d'extrémité sont munies d'une deuxième branche de fixation ayant également des paliers à vis disposés à symétrie longitudinale et destinés à une liaison amovible avec les installations de distribution, **caractérisé par** les caractéristiques :
1.1 les supports isolants sont réalisés par des cuvettes (PS) polaires de réception de contacteurs sous vide,
1.2 les cuvettes (PS) polaires ont respectivement un profil (UP) d'entourage incurvé vers l'intérieur,
1.3 les cuvettes (PS) polaires sont, en vue d'une liaison amovible avec les contacteurs sous vide, équipées respectivement de nervures (VB1, VB2) de fixation de contacteurs sous vide disposées symétriquement comme en un miroir l'une par rapport à l'autre,
1.4 les cuvettes (PS) polaires sont munies, en vue d'une liaison amovible avec les installations de distribution, respectivement d'une nervure (PB) de fixation de cuvette polaire,
1.5 les cuvettes (PS) polaires comportent à l'intérieur un nombre, adapté aux conditions de tension des contacteurs sous vide, de nervures (QR ...) transversales qui font le tour et qui s'étendent à peu près à angle droit par rapport aux axes (LA) longitudinaux des cuvettes (PS) polaires.

2. Supports isolants suivant la revendication 1, **caractérisés par** les caractéristiques
1.2 les cuvettes (PS) polaires sont munies respectivement dans la partie où agissent les forces du dispositif de transmission d'une nervure (FS) de guidage,
2.2 les extrémités tournées vers l'intérieur de la nervure (FS) de guidage ont respectivement un évidement (FA) de guidage.

3. Supports isolants suivant la revendication 1 et les revendications 1 et 2, **caractérisés par** la caractéristique
3.2 le profil (UP) d'entourage incurvé vers l'intérieur des cuvettes (PS) polaires est tel que le montage de contacteurs sous vide, dont les pourtours sont différents et dont les distances mutuelles sont différentes, s'effectue dans les installations de distribution par des cuvettes (PS) polaires du même type de construction.
